# EUROPEAN PATENT SPECIFICATION

(11) **EP 0 821 534 B1**
(45) Date of publication and mention of the grant of the patent: **06.11.2002**
(21) Application number: 97850104.7
(22) Date of filing: 02.07.1997
(51) Int. Cl.: H04Q 7/20, H04B 7/26, H04Q 7/32

(54) **Area restricted radio communication system**
Funkkommunikationssystem mit beschränktem Versorgungsbereich
Système de radio-communication à couverture limitée

(30) Priority: 25.07.1996 SE 9602864
(43) Date of publication of application: 28.01.1998
(73) Proprietor: TELIA AB, 123 86 Farsta (SE)
(72) Inventor: Öhman, Hans, 977 53 Lulea (SE); Larsson, Roger, 976 32 Lulea (SE)
(74) Representative: Hopfgarten, Nils

(56) References cited:
- WO-A-94/15431
- WO-A-95/01070
- WO-A-95/26113

## Description

### FIELD OF THE INVENTION

The present invention relates to an area restricted digital radio based broadband system and a method according to the preambles of claims 1 and 4 respectively.

### PRIOR ART

A system of the above mentioned kind is previously known from WO 95/26113.

In a radio based broadband system which in all essentials is based on battery-powered terminals there are restrictions which leads to that the user not always can be connected to the network. One restriction is when the network only has coverage within a certain restricted geographical area, such as for instance city centres, air terminals, exhibition halls etc. Another restriction can be that the user wants to save battery capacity and therefore only connects himself/herself to the network when necessary.

A mobile telecommunications system having a battery-powered telecomputer is described in WO 94/15431.

The problem which the invention intends to solve consequently is to attend to that these terminals in an area restricted radio based broadband system can be accessed when they are outside the geographical area for which they have coverage, and that they also can be accessed when the are switched off.

### SUMMARY OF THE INVENTION

The above mentioned problem is solved by a system according to claim 1 and a method according to claim 4.

Thus in the present invention a global paging channel is utilized to contact said portable terminals when broadband sessions intended for said terminals exist in said area restricted digital radio based broadband system.

One advantage with this is of course that when a terminal is outside the area for which it has coverage, the terminal is informed directly via the paging channel when a session intended for said terminal exists, at which said terminal can be moved to a coverage area for connection of the session.

The terminal also need not all the time be connected to the battery demanding broadband network, but can be connected when necessary when a session exists, which in the same way as above is informed about via the paging channel.

Further characteristics of the invention are given in the subclaims.

### DETAILED DESCRIPTION OF AN EMBODIMENT OF THE INVENTION

The embodiment relates to a nation-wide covering GSM paging functionality for a broadband radion system based on LMDS (Local Multipoint Distribution Services).

By using GSM as paging channel for an LMDS-based broadband radio system, a nation-wide covering paging procedure is achieved.

There are two typical cases of paging (in both cases the GSM-receiver is supposed to be switched on) :
1. The user of the terminal is within the coverage of the broadband radio system:
   - If the terminal is switched on, it performs a random access and connects to the broadband network. After that it responds to the paging request and connects the session.
   - If the terminal is not switched on, one gets the same type of notification as at a conventional SMS (Short Message Service). After that the user switches on his/her terminal which then connects according to the previous point.
2. The user of the terminal is outside the areas for which the broadband radio system has coverage:
   - The terminal answers via SMS that it is outside the coverage area.
   - The terminal connects by GSM' data service, at which the user can inform when he/she can be within an area where broadband coverage exists. In certain cases also the session can be performed by GSM's narrow band data transmission.

In a radio based broadband system based on battery-powered laptops there will be two reasons for not being connected to the network:
1. The network only has coverage within certain "islands", for instance city centres, air terminals, exhibition halls.
2. In order to save battery one connects to the network only when necessary.

Also in this type of network there is the need to be accessed, i.e. paging is desirable.

What is said above is only to be regarded as an advantageous embodiment of the invention, and the scope of protection of the invention is only defined of what is indicated in the following patent claims.

## Claims

1. An area restricted digital radio based broadband system including a broadband network and at least one portable terminal, said system being adapted to utilise a global paging channel to contact said terminal in response to the occurrence of broadband sessions intended for said terminal in said area restricted system, **characterized in that** said terminal includes a GSM-receiver activated at all time and said paging channel is a GSM-channel, and **in that** said terminal is adapted, when a user of said terminal is within the coverage area of said system and the terminal is switched on, to perform a random access operation and connect to said broadband network to establish a broadband session connection, and **in that** means are provided to transmit, if said terminal is switched off, a SMS notification to said GSM receiver to turn on said terminal, and **in that**, when said terminal is outside the coverage area of said system, said GSM-receiver is arranged to answer via SMS and inform that it is outside the coverage area, said terminal being arranged to establish connection by GSM's data service.

2. The system according to claims 1, **characterized in that** said system is an LMDS.

3. The system according to claim 1 or 2, **characterized in that** said terminal is a battery-powered laptop.

4. A method of utilising a global paging channel to contact at least one portable terminal of an area restricted digital radio based broadband system in response to the occurrence of broadband sessions in said area restricted system intended for said terminal, **characterized by**, if a user of said terminal is within the coverage area for said area restricted system and said terminal is switched on, the following steps:
a) a random access operation is performed by said terminal,
b) the terminal is connected to said area restricted system,
c) the terminal replies to the paging request and establishes a broadband session connection; and
if the terminal is not switched on, a GSM-receiver included in said terminal and intended for the paging channel, receives a notification according to SMS, after which the user switches on said terminal and steps a) - c) above are performed establishing a broadband session connection, and, if a user of said terminal is outside the coverage area for said area restricted system, said GSM-receiver answers via SMS that it is outside said coverage area, and the terminal establishes connection by GSM's data service, after which said user informs when he/she can be within said coverage area for establishing connection of said session, said paging channel consisting of a GSM-channel and said area restricted system being an LMDS.

## Patentansprüche

1. Digitales auf Funk beruhendes Breitbandsystem mit beschränktem Versorgungsbereich, das ein Breitbandnetzwerk und wenigstens ein tragbares Endgerät einschließt, welches System dazu ausgebildet ist, einen globalen Funkrufkanal zu verwenden, um mit dem Endgerät als Reaktion auf das Auftreten von Breitbandsitzungen in Kontakt zu treten, die für das Endgerät in dem System mit beschränktem Versorgungsbereich bestimmt sind, **dadurch gekennzeichnet, daß** das Endgerät einen dauernd aktivierten GSM-Empfänger (globales System für mobile Kommunikationen) einschließt und der Funkrufkanal ein GSM Kanal ist, und daß das Endgerät dazu ausgebildet ist, wenn ein Benutzer des Endgeräts innerhalb des Versorgungsbereiches des Systems ist und das Endgerät angeschaltet ist, einen Betrieb mit wahlfreiem Zugriff durchzuführen und sich mit dem Breitbandnetzwerk zu verbinden, um eine Breitbandsitzungsverbindung einzurichten, und daß Mittel vorgesehen sind, um, wenn das Endgerät abgeschaltet ist, eine SMS-Meldung zu dem GSM-Empfänger zu senden, um das Endgerät anzuschalten, und daß, wenn das Endgerät sich außerhalb des Versorgungsgebiets des Systems befindet, der GSM-Empfänger so ausgebildet ist, daß er über SMS antwortet und darüber informiert, daß er außerhalb des Versorgungsbereichs ist, wobei das Endgerät so ausgebildet ist, daß es Verbindung mit Hilfe des Datendienstes des GSM einrichtet.

2. System nach Anspruch 1, **dadurch gekennzeichnet, daß** das System ein LMDS (lokaler Vielpunktverteilungsdienst) ist.

3. System nach Anspruch 1 oder 2, **dadurch gekennzeichnet, daß** das Endgerät ein batteriebetriebener Laptop ist.

4. Verfahren zum Verwenden eines globalen Funkrufkanals, um mit wenigstens einem tragbaren Endgerät eines digitalen auf Funk beruhenden Breitbandsystems mit beschränktem Versorgungsbereich als Reaktion auf das Auftreten von Breitbandsitzungen in dem System mit beschränktem Versorgungsbereich, das für das Endgerät bestimmt ist, in Verbindung zu treten, **gekennzeichnet durch**, wenn ein Benutzer des Endgeräts sich innerhalb des Versorgungsbereiches für das beschränkte System befindet und das Endgerät eingeschaltet ist, die folgenden Schritte:
a) es wird **durch** das Endgerät eine Betriebsweise mit wahlfreiem Zugriff durchgeführt,
b) das Endgerät wird mit dem System mit beschränktem Versorgungsbereich verbunden,
c) das Endgerät antwortet auf die Funkrufanforderung und richtet eine Breitbandsitzungsverbindung ein; und
wenn das Endgerät nicht eingeschaltet ist, empfängt ein GSM-Empfänger, der in dem Endgerät enthalten ist und für den Funkrufkanal bestimmt ist, eine Benachrichtigung gemäß SMS, nach welcher der Benutzer das Endgerät einschaltet, und es werden die Schritte a)-c) unter Einrichtung einer Breitbandsitzungsverbindung durchgeführt, und, wenn sich ein Benutzer des Endgeräts außerhalb des Versorgungsbereiches des Systems mit beschränktem Versorgungsbereich befindet, antwortet der GSM-Empfänger über SMS, daß er sich außerhalb des Versorgungsbereiches befindet, und das Endgerät stellt eine Verbindung **durch** den Datendienst des GSM her, wonach der Benutzer/die Benutzerin informiert, wann er/sie innerhalb des Versorgungsbereiches sein kann, um eine Verbindung der Sitzung einzurichten, welcher Funkrufkanal aus einem GSM-Kanal besteht, und wobei das System mit beschränktem Versorgungsbereich ein LMDS ist.

## Revendications

1. Système à large bande à base de radio numérique à couverture limitée incluant un réseau à large bande et au moins un terminal portable, le dit système étant prévu pour utiliser un canal de téléappel général pour contacter le dit terminal en réponse à l'apparition de sessions à large bande destinées au dit terminal dans le dit système à couverture limitée, **caractérisé en ce que** le dit terminal comprend un récepteur GSM constamment activé et le dit canal de téléappel est un canal GSM, **en ce que** le dit terminal est prévu, lorsqu'un utilisateur du dit terminal est à l'intérieur de la zone de couverture du dit système et que le terminal est allumé, pour effectuer une opération d'accès sélectif et se connecter au dit réseau à large bande afin d'établir une connexion de session à large bande, **en ce que** des moyens sont prévus pour transmettre, si le dit terminal est éteint, une notification de SMS au dit récepteur GSM afin d'allumer le dit terminal, et **en ce que**, lorsque le dit terminal est en dehors de la zone de couverture du dit système, le dit récepteur GSM est agencé pour répondre via SMS et signaler qu'il est en dehors de la zone de couverture, le dit terminal étant agencé pour établir une connexion par un service de données de GSM.

2. Système selon la revendication 1, **caractérisé en ce que** le dit système est un LMDS.

3. Système selon la revendication 1 ou 2, **caractérisé en ce que** le dit terminal est un appareil portable alimenté par batterie.

4. Procédé d'utilisation d'un canal de téléappel général pour contacter au moins un terminal portable d'un système à large bande à base de radio numérique à couverture limitée en réponse à l'apparition de sessions à large bande dans le dit système à couverture limitée destinées au dit terminal, **caractérisé en ce qu'**on effectue, si un utilisateur du dit terminal est dans la zone de couverture du dit système à couverture limitée et si le dit terminal est allumé, les étapes suivantes :
(a) une opération d'accès sélectif est exécutée par le dit terminal,
(b) le terminal est connecté au dit système à couverture limitée,
(c) le terminal répond à la demande de téléappel et établit une connexion de session à large bande ; et
si le terminal n'est pas allumé, un récepteur GSM inclus dans le dit terminal et prévu pour le canal de téléappel reçoit une notification conforme à SMS, après quoi l'utilisateur allume le dit terminal et les étapes (a) à (c) ci-dessus sont effectuées pour établir une connexion de session à large bande, et, si un utilisateur du dit terminal est en dehors de la zone de couverture pour le dit système à couverture limitée, le dit récepteur GSM répond via SMS qu'il est en dehors de la dite zone de couverture, et le terminal établit une connexion par un service de données de GSM, après quoi le dit utilisateur signale lorsqu'il peut être dans la dite zone de couverture pour établir une connexion de la dite session, le dit canal de téléappel consistant en un canal GSM et le dit système à couverture limitée étant un LMDS.
